# EUROPEAN PATENT SPECIFICATION

(11) **EP 2 865 054 B1**
(45) Date of publication and mention of the grant of the patent: **31.10.2018**
(21) Application number: 13742456.0
(22) Date of filing: 30.07.2013
(51) Int. Cl.: H01R 13/52, H01R 13/523, H01R 13/533, E21B 33/038, E21B 17/02, H02G 15/04

(54) **DOWNHOLE CABLE TERMINATION APPARATUS AND METHOD THEREOF**
BOHRLOCHKABELABSCHLUSSVORRICHTUNG UND VERFAHREN DAFÜR
APPAREIL DE TERMINAISON DE CÂBLE DE FOND DE TROU ET MÉTHODE ASSOCIÉE

(30) Priority: 04.10.2012 GB 201217790; 04.10.2012 US 201261709498 P
(43) Date of publication of application: 29.04.2015
(73) Proprietor: Siemens Aktiengesellschaft, 80333 München (DE)
(72) Inventor: BURROW, Christopher, Ulverston Cumbria Lancashire LA12 9DD (GB); SIMMONDS, Mark, Ulverston Cumbria Lancashire LA12 7QL (GB)
(74) Representative: Maier, Daniel Oliver
(86) International application number: PCT/EP2013/065984
(87) International publication number: WO 2014/053259

(56) References cited:
- US-A- 5 833 490
- US-A1- 2009 317 997

## Description

The present invention relates to a downhole cable termination apparatus for terminating a cable which is to extend downhole into a downhole environment from a tubing hanger to electrical equipment. It also relates to a downhole termination assembly and a method of manufacturing a downhole termination assembly.

Typically a subsea well is provided with a tubing hanger for suspending production tubing which extends into a reservoir or a dummy reservoir. The tubing hanger may also house a connector which terminates a cable which extends downhole to supply power to electrical equipment such as an electric submersible pump located in the reservoir or dummy reservoir. Such connectors in the tubing hanger are subjected to hostile conditions such as extreme temperatures and pressures and aggressive chemicals and thus the connectors need to be designed to deal with these conditions.

A known system for this environment is the SpecTRON 5 (trademark) Electrical Submersible Pump (ESP) power feedthrough system produced by Tronic Limited. This system comprises a connector for terminating the cable which extends downhole. The termination between the cable and a pin is formed by means of a cable crimp between the two parts. The termination is covered by an elastomeric termination sleeve which is stretched over the end of the cable and connector pin. This termination is housed in a cable termination chamber which is sealed from the downhole environment by an elastomeric diaphragm and an elastomeric cable boot. The elastomeric diaphragm is filled with a dielectric gel. The diaphragm is flexible and can transmit pressure from the ambient environment to the connector internals to maintain a minimal pressure differential.

The document US 5,833,490 A discloses a high pressure instrument wire connector that makes use of several compression fittings to provide sealing to a jacket of an electrical conductor.

The document US 2009/0317997 A1 discloses a system and method for connecting a power cable with a submersible component. The disclosed connector system comprises a plurality of individual connectors, each employing plural compression fittings to provide sealing between the power cable and the submersible component.

A first aspect not forming part of the present invention is concerned with providing a downhole termination apparatus with an improved sealing arrangement between a termination of a cable and the downhole environment.

Viewed from the first aspect not forming part of the invention, in a first alternative thereof, there is provided a downhole cable termination apparatus for terminating a cable which is to extend downhole from a tubing hanger to electrical equipment, the apparatus comprising: an electrical contact for electrical engagement with a conductor of the cable to form a termination, which, in use, is to be electrically insulated by an insulating portion around the termination; and a seal to be located downhole from the insulating portion for sealing between the insulating portion and the downhole environment, wherein the seal is a metallic seal.

By providing an apparatus with a metallic seal which is to be provided downhole from the insulating portion a path between the downhole environment and the insulating portion can be sealed by means of the metallic seal.

As mentioned above, the connectors in the tubing hanger are subjected to hostile conditions such as extreme temperatures and pressures and aggressive chemicals. Additionally, gases from the well rise up and sit around the connector and elastomers are prone to absorbing these gases.

The pressure in the downhole environment may fluctuate, for example due to the operation of an electric submersible pump in the well. This pressure fluctuation can cause a problem for the elastomers which have absorbed gas. A rapid drop in pressure results in the gas which has permeated the elastomer rapidly expanding. Usually the majority of the expanding gas absorbed into the material is unable to diffuse to accommodate the expansion and as a result the gas expansion within the material may damage and tear the material. This effect is known as rapid gas decompression (RGD).

In some prior art systems there have been attempts to minimise the effect of rapid gas decompression by using elastomers which absorb less gas and/or by constraining the elastomers so as to prevent the gas/elastomer volume from expanding and hence preventing the elastomer from tearing. The internal pressure of the constrained elastomer will build up until the gas can diffuse out.

The inventors of the present invention have realised that the problem of rapid gas decompression can be overcome in a more reliable manner by designing the connector so that elastomeric materials are not in contact with the gas in the downhole environment which is subject to pressure fluctuations.

In the first aspect not forming part of the invention, the insulating portion can be prevented from coming into contact with the gas which fluctuates in pressure by use of a metallic seal downhole of the insulating portion. The downhole metal seal can prevent the problem of RGD occurring in the insulating portion as it provides a barrier to prevent gas coming into contact with the insulating portion which may absorb the gases. Additionally, because the metal seal is not susceptible to rapid gas decompression itself it is less likely to fail during the lifetime of the connector and therefore provides a reliable seal over the lifetime of the connector.

Preferably, the seal is arranged to be energised by being axially compressed. This feature is of independent patentable significance.

Viewed from the first aspect not forming part of the invention, in a second alternative thereof, there is provided a downhole cable termination apparatus for terminating a cable which is to extend downhole from a tubing hanger to electrical equipment, the apparatus comprising: an electrical contact for electrical engagement with a conductor of the cable to form a termination, which, in use, is to be electrically insulated by an insulating portion around the termination; and a seal to be located downhole from the insulating portion for sealing between the insulation portion and the downhole environment, wherein the seal is arranged to be energised by being axially compressed.

In prior art connectors, for example the SpecTRON 5 (trademark) discussed above, the termination is housed in a cable termination chamber which is sealed from the downhole environment by an elastomeric diaphragm and an elastomeric cable boot. The seal is provided by the elastomeric diaphragm having a lip which is held between an outer casing of the connector and a sea! holder which extends around the cable and the elastomeric cable boot extending over a portion of the seal holder and the cable. The lip of elastomeric diaphragm is energised by radial compression between the outer casing and the seal holder and the elastomeric cable boot radially grips the cable and the portion of the seal holder.

The advantage of having a seal which is energised by means of axial compression is that such an arrangement can achieve relatively high energising force and hence is able to provide a highly effective seal.

The seal may be a metallic seal or it may be made from a material other than metal such as a polymeric material, or it may be metal and other material composite. It is preferable that the seal is made from a material which is not susceptible to rapid gas decompression. By using a seal which is resistant to rapid gas decompression to seal the insulating portion from the downhole environment, the seal can prevent gas reaching the parts of the connector which are susceptible to rapid gas decompression and can itself withstand the downhole pressure fluctuations.

The first aspect not forming part of the invention, also provides a downhole cable termination assembly, the assembly comprising the apparatus according to the first or second alternatives of the first aspect described above, the cable which is to extend downhole from a tubing hanger to electrical equipment and which is engaged with the electrical contact to form the termination, and the insulating portion around the termination.

The assembly may include some or all of the optional features and benefits described herein in relation to the first and second alternatives of the first aspect of the invention.

The first aspect not forming part of the present invention also provides a method of manufacturing a downhole cable termination assembly, the method comprising: providing a cable which is to extend downhole from a tubing hanger to electrical equipment; terminating the conductor of the cable with an electrical contact to form a termination; providing an insulating portion around the termination; sealing between the insulating portion and the outside environment by providing a metallic seal such that when the downhole cable termination assembly is in use the metallic seal seals between the insulating portion and the downhole environment.

The first aspect not forming part of the present invention also provides a method of manufacturing a downhole cable termination assembly, the method comprising: providing a cable which is to extend downhole from a tubing hanger to electrical equipment; terminating the conductor of the cable with an electrical contact to form a termination; providing an insulating portion around the termination; sealing between the insulating portion and the outside environment by axially compressing a seal such that when the downhole cable termination assembly is in use the seal which is axially compressed seals between the insulating portion and the downhole environment.

The method may comprise providing some or all of the features discussed herein in relation to the apparatus of the first and second alternative of the first aspect and the assembly of the first aspect of the assembly.

The discussion below relates to the first aspect not forming part of the invention in its first alternative and/or its second alternative, as well as the downhole cable termination assembly and the method of manufacturing the assembly.

The electrical contact of the downhole cable termination apparatus is for electrical engagement with a conductor of a cable and preferably is for electrical engagement with a second conductor, for example another cable. Preferably the electrical contact is for electrical engagement with a conductor of a connector half such as a pin. The electrical contact may be a conductive sleeve which is arranged to extend around the end portion of the conductor of the cable and which is arranged to extend around the end portion of a second conductor, which as mentioned above may be a pin of a connector half. The conductive sleeve may be attached to the conductors by any means which provides good electrical engagement such as being crimped, by a push fit and or being fixed by one or more fixing members such as a screw. Preferably, when the electrical contact comprises a conductive sleeve it is attached to the conductor by means of being crimped and is attached to the second conductor, for example a pin, by a plurality of grub screws which extend radially through the sleeve into the pin.

The insulating portion which will electrically insulate the termination may be any known insulating means such as an elastomeric sleeve which is stretched over the termination, a dielectric gel around the termination which may be held in an elastomeric boot and/or a solid elastomeric insulating material around the termination. Preferably the insulating portion is a solid elastomeric material, for example room temperature vulcanised silicone rubber (RTV silicone rubber). If the insulating portion is RTV silicone rubber preferably it is cast or moulded around the termination.

By providing an insulating portion which is cast around the insulation entrapment of air near the termination can be minimised or eliminated. This can help prevent electrical discharges in connectors with high electric gradients such as high voltage connectors and connectors with an earth near the conductor which cause a high electrical stress.

The apparatus preferably comprises a retaining ring for axially compressing the seal. The retaining ring which may be arranged to extend around the cable and in use, be located downhole of the seal.

With such an arrangement the retaining ring can be used to exert axial force on to the seal to energise the seal. Preferably, the retaining ring is arranged such that, in use, rotation of the retaining ring axially compresses the seal to energise the seal.

The apparatus may comprise a termination cover for housing at least part of the termination and at least part of the insulating portion.

By providing a termination cover which houses at least part of the termination and insulating portion the insulating portion can be shielded from the downhole environment by means of the termination cover.

Preferably the termination cover is made of a material which acts as a barrier to the downhole gases. Additionally, it is preferable that the termination cover does not transmit downhole pressures to the insulating portion housed by the termination cover. The termination cover may be made from a metallic material, such as super duplex steel.

If the termination cover is made of a metal it is not susceptible to rapid gas decompression and it can provide both a gas barrier and a pressure barrier between the downhole environment and the insulating portion. Preferably the termination cover extends circumferentially around the insulation portion. It may provide a chamber therein for the insulating portion, the chamber being isolated from the downhole environment.

In a preferred embodiment not forming part of the present invention, the metallic seal or the seal which is arranged to be energised by being axially compressed is adapted to extend around the cable and, in use, is positioned between the termination cover and the cable.

With such an arrangement the seal can create a seal between the termination cover and the cable to provide a barrier between the downhole environment and the insulating portion.

The metallic seal or the seal which is arranged to be energised by being axially compressed may engage directly with the cable.

A cable may comprise a conductive core (for example copper) which is within an insulating sheath (for example PEEK) which is inside a protective sheath (for example lead) which is inside a steel armour. If the seal engages the steel armour this may not provide effective sealing as the armour may not itself be a sealed barrier or because the uneven surface of the steel armour prevents an effective seal. In one preferred assembly, the seal engages the protective sheath of the cable. However, if the protective sheath is made of lead, it may be too soft for direct engagement with a metallic seal or the seal which is arranged to be energised by being axially compressed, because the engagement may damage the cable.

Therefore it may be preferable that the apparatus comprises a sleeve arranged to extend around the cable and provides an engagement surface for the seal. With this arrangement, effective sealing may be obtained without damaging the cable. In use, the sleeve is preferably located downhole of the insulating portion.

If a termination cover is provided the seal can engage between the termination cover and the sleeve. The sleeve can provide a radially outwardly facing engagement surface for the seal, and the termination cover can provide a radially inwardly facing engagement surface for the seal.

Preferably the sleeve is made of metal. The sleeve, seal and termination cover can provide a barrier between the insulating portion and the downhole environment.

The sleeve is preferably attached to a lead sheath of the cable. The sleeve may be fixed to the cable by any known means such as mechanical fasteners or adhesive. Preferably the sleeve is attached to the cable by solder. This arrangement means that a leakage path along the surface of the cable under the sleeve can be prevented. Thus such a path from the downhole environment to the insulating portion is closed off. Additionally, soldering the sleeve onto the cable exerts minimal force onto the cable during fixing and therefore minimises the probability of damaging the cable during manufacture of the downhole assembly.

If a retaining ring is provided for axially compressing the seal, as discussed above, the retaining ring may be threadedly engaged with the sleeve providing an engagement potion for the seal. However, the retaining ring is preferably threadedly engaged with the termination cover. During manufacture of the downhole assembly, when the retaining ring is rotated it is translated axially to compress and energise the seal. The retaining ring may then stay in position exerting an axial force on the seal to thereby maintain the seal in an energised state.

In a preferred embodiment not forming part of the present invention, the apparatus comprises at least one back-up seal which in use is located downhole of the insulating portion but uphole of the primary seal. The back-up seal may act between the cable and the termination cover. The back-up seal is preferably provided between the sleeve around the cable and the termination cover. There may be a first back-up seal between the cable and the sleeve, and a second back-up seal between the sleeve and the termination cover. The back-up seal may be a second metallic seal, a seal which is arranged to be energised by means of axial compression or a seal which is arranged to be energised by means of radial compression. Preferably the back-up seal is an elastomeric seal which is energised by means of being radially compressed.

In a preferred embodiment not forming part of the present invention, the apparatus comprises a conductor support body for housing at least part of the insulating portion and which, in use, is located uphole of the termination cover.

The conductor support body may house an uphole portion of the insulating portion. By providing a conductor support body which houses at least part of the insulating portion the insulating portion can be shielded from the downhole environment by means of the conductor support body.

Preferably the conductor support is made of a material which acts as a barrier to the downhole gases. Additionally, it is preferable that the conductor support body does not transmit downhole pressures to the insulating portion housed in the conductor support body. The conductor support body may be made of a metallic material, such as super duplex steel. If the conductor support is made of a metal it is not susceptible to rapid gas decompression and it can provide both a gas barrier and a pressure barrier between the downhole environment and the insulating portion.

Preferably the conductor support body extends circumferentially around the insulating portion. The insulating portion may be housed partially in the termination cover and partly in the conductor support body. The conductor support body may be arranged to be sealed to the termination cover.

Preferably the conductor support body engages with the uphole end of the termination cover. The apparatus may comprise a second seal for sealing between the conductor support body and the termination cover.

The second seal may be a metallic seal. The second seal may be arranged to be energised by being axially compressed. The termination cover and the conductor support body may be held together by means of a plurality of screws which can also provide the energising force (axial compression) for the second seal.

By providing a metallic seal between the termination cover and the conductor support body a path between the downhole environment and the insulating portion can be sealed to prevent gas from the downhole environment reaching the insulating portion housed in the termination cover and the conductor support body to prevent rapid gas decompression affecting the insulating portion. In certain embodiments, the first mentioned seal, the second seal, the termination cover and the conductor support body are arranged such that together they separate the insulating portion from the downhole environment. All of these components are preferably formed of a material which is not susceptible to RGD, e.g. steel. Therefore no RGD susceptible component is exposed to the downhole environment.

In a preferred embodiment not forming part of the present invention, the termination cover and the conductor support body together enclose the insulating portion and are sealed such that the insulating portion is isolated from the downhole environment.

Preferably the internal pressure of a chamber provided by the termination cover in which the insulating portion is housed is isolated from pressure in the downhole environment, i.e. the chamber is not pressure compensated with the downhole environment. This means that the pressure surrounding the insulating portion will not fluctuate as the downhole pressure fluctuates and as a result rapid gas decompression of the insulating material will not occur when a rapid drop in pressure occurs in the downhole environment, which is an advantage if gas has leaked/permeated into the chamber.

Preferably, in use at moderate temperatures, i.e. the temperature at the surface before the apparatus is deployed, there is a cavity between the insulating portion and the termination cover. The termination chamber may define a chamber for the insulating portion, the chamber providing, in use, a cavity between the insulating portion and the termination cover for differential thermal expansion or contraction thereof.

The insulating portion and the termination cover may have different coefficients of thermal expansion. For example, when the insulating portion is made of RTV silicone rubber and the termination cover is made of steel the difference in coefficients of thermal expansion can be an order of magnitude or more. As a result when the apparatus is subjected to changes in temperature the components will expand by different amounts. Therefore by providing a cavity between the insulation portion and the termination cover, when the temperature of the apparatus changes the insulating portion has space in which to expand.

The chamber is preferably arranged to receive oil whereby, in use, the cavity can be filled with oil. This arrangement can avoid the presence of air pockets in the apparatus.

It is preferable for the apparatus to comprise a compensation means for accommodating volume changes within the chamber due to differential thermal expansions. By providing a compensation means a pressure build up in the chamber within the termination cover which houses the insulation portion can be prevented. If the build up of pressure is not compensated for it may cause damage, for example to the insulating portion and/or any seals sealing the chamber.

The compensation means may be a flexible boot. Preferably the compensation means is a compensation chamber which is in fluid communication with the chamber for the insulating portion. The compensation chamber may be fluidly connected to the cavity by means of a passage which extends through the termination cover from the compensation chamber to the chamber for the insulating portion. The compensation chamber may be provided in the termination cover or the conductor support body. Preferably the chamber for the insulating portion, the passage and the compensation chamber are filled with a pressure transmitting fluid such as oil.

In the preferred embodiment not forming part of the present invention, the compensation chamber can adjust in volume to accommodate changes in volume of the cavity between the insulating portion and the termination cover caused, e.g. by differential thermal expansion of the components of the apparatus and in particular by changes in volume of the insulating portion itself. The compensation chamber may contain a piston which can move within the compensation chamber to accommodate volume changes.

A second aspect not forming part of the present invention is concerned with providing a downhole termination apparatus with an improved arrangement for dealing with downhole pressure fluctuations.

Viewed from the second aspect not forming part of the present invention, there is provided downhole cable termination apparatus for terminating a cable which is to extend into a downhole environment from a tubing hanger to electrical equipment, the apparatus comprising: an electrical contact for electrical engagement with a conductor of the cable to form a termination, which, in use, is to be electrically insulated by an insulating portion; and a housing defining a chamber for receiving the insulating portion and in which the internal pressure is isolated from pressure in the downhole environment.

By providing an apparatus with a chamber for receiving an insulating po1iion which has an internal pressure which is isolated from the pressure in the downhole environment the insulating portion can be protected from the extreme pressures and fluctuating pressures experienced downhole.

As mentioned above, the connectors in the tubing hanger are subjected to hostile conditions such as extreme temperatures and pressures and aggressive chemicals.

The pressure in the downhole environment may fluctuate, for example due to the operation of an electric submersible pump in the well. This pressure fluctuation can cause a problem for the elastomers which have absorbed gas, A rapid drop in pressure results in the gas which has permeated the elastomer rapidly expanding. Usually the majority of the expanding gas absorbed into the material is unable to diffuse to accommodate the expansion and as a result the gas expansion within the material may damage and tear the material. This effect is known as rapid gas decompression (RGD).

In some prior art systems there have been attempts to minimise the effect of rapid gas decompression by using elastomers which absorb less gas and/or by constraining the elastomers so as to prevent the gas/elastomer volume from expanding and hence preventing the elastomer from tearing, internal pressure will build up until the gas can diffuse out.

The inventors have realised that the problem of rapid gas decompression can be overcome or minimised in a more reliable manner by isolating the pressure around the insulating portion (which is typically made of an elastomer, for example room temperature vulcanising silicone rubber (RTV silicone rubber)) from the pressure of the downhole environment which fluctuates.

In the second aspect not forming part of the present invention, the insulating portion is received in a chamber which is isolated from the fluctuating pressure. If the insulating portion is not subjected to fluctuating pressures the problem of rapid gas decompression (RGD) can be prevented or minimised.

Preferably the thickness of the insulating portion around the electrical contact is between 0.3 and 1 times the diameter of the electrical contact which forms the termination, more preferably it is between 0.4 and 0.6 times the diameter. In a preferred embodiment not forming part of the present invention, the thickness of the insulating portion around the electrical contact is 0.5 of the diameter of the electrical contact which forms the termination.

The thickness may be at least 0.3 or 0.4 or 0.5 or 0.6 times the diameter.

The second aspect not forming part of the invention, also provides a downhole cable termination assembly, the assembly comprising the apparatus of the second aspect, a cable which is to extend into a downhole environment from a tubing hanger to electrical equipment, the cable being in electrical engagement with the electrical contact to form the termination, and the insulating portion electrically insulating the termination, wherein the internal pressure of the chamber for receiving the insulating portion is isolated from pressure in the ambient environment such that in use the internal pressure of the chamber is isolated from the pressure in the downhole environment.

The assembly may include some or all of the optional features and benefits described herein in relation to the second aspect.

The second aspect not forming part of the present invention also provides a method of manufacturing a downhole cable termination assembly, the method comprising: providing a cable which is to extend into a downhole environment from a tubing hanger to electrical equipment; terminating the conductor of the cable with an electrical contact to form a termination; providing an insulating portion around the termination; and housing the insulating portion in a chamber in a housing such that, in use, the internal pressure of the chamber housing the insulating portion is isolated from pressure in the downhole environment.

The method may comprise providing some or all of the features discussed herein in relation to the apparatus and the assembly of the second aspect.

The discussion below relates to the apparatus in its second aspect, as well as the downhole cable termination assembly and the method of manufacturing the assembly of the second aspect.

The chamber defined by the housing may have the same volume as the insulating portion which is received in the chamber. However, preferably the housing is arranged to provide an annular cavity between the insulating portion and the housing. In a preferred embodiment, at moderate temperatures (e.g. room temperature during manufacture of the assembly), the size of the chamber is larger than the size of the insulating portion so that during manufacture when the insulating portion is received in the chamber there is an annular cavity between the insulating portion and the housing.

Preferably, at room temperature, the volume of the annular cavity is between 10% and 40% of the total volume of the chamber. In a preferred embodiment the volume of the annular cavity is 30% of the total volume of the chamber. The volume of the annular cavity may be at least 10% or 20% or 30% of the total volume of the chamber at room temperature.

The housing and the insulating materials may be formed of different materials, for example the housing may be formed of a metal and the insulating portion may be formed of an elastomer. As a result the housing and the insulating portion may have different coefficients of thermal expansion. When the insulating portion is formed of an elastomer and the housing is formed of a metal the difference in differential thermal expansions can be an order of magnitude or more. As a result when the assembly is subjected to a change in temperature the volume of the insulating portion may change significantly more than the housing. If there is no space for the insulating portion to expand into when the temperature rises a pressure build up can occur in the housing. This pressure may cause damage to the parts contained within the housing and/or any seals isolating the chamber from the downhole environment. This pressure build up can be minimised by providing an annular cavity to provide space for the insulating portion to expand into.

It is preferable for the apparatus to comprise a compensation means for accommodating changes of volume of the annular cavity within the chamber due to differential thermal expansions and contractions. By providing a compensation means a pressure build up in the chamber within the housing which houses the insulation portion, for example due to differential thermal expansion, can be prevented. If the build up of pressure is not compensated it may cause damage to the insulating portion and any seals sealing the chamber.

The compensation means may be a flexible boot. Preferably the compensation means is a compensation chamber which is in fluid communication with the chamber for the insulating portion. The compensation chamber may be fluidly connected to the cavity by means of a passage which extends through the housing from the compensation chamber to the chamber for the insulating portion. Preferably the compensation chamber is provided in the housing as this can allow the assembly to be more compact. Preferably the chamber for the insulating portion, the passage and the compensation chamber are filled with a pressure transmitting fluid such as oil. This arrangement can avoid the presence of air pockets in the apparatus which can cause electrical discharges if the electrical gradient in the assembly is high enough.

In the preferred embodiment not forming part of the invention, the compensation chamber can adjust in volume to accommodate changes in volume of the cavity between the insulating portion and the termination cover. The compensation chamber may contain a compensator piston which can move within the compensation chamber to accommodate volume changes caused e.g. by differential thermal expansion of the components of the apparatus.

Preferably the compensator piston is biased by means of a spring. This arrangement keeps the oil in the annular cavity, passage and compensator piston under pressure.

Preferably the housing is made of a rigid material. If the housing is made of a sufficiently rigid material it will not transmit pressure changes from the downhole environment to a cavity within the housing and therefore can isolate the pressure of the chamber in the housing from the pressure on the outside of the housing. If the housing is made of a rigid material it can be directly in contact with the downhole fluctuating pressures whilst isolating the pressure of the chamber inside the housing from the downhole environment. In other words the chamber inside the housing can be prevented from being pressure balanced.

It is also preferable for the housing to be made of a sufficiently strong material so that it is able to withstand crush pressures that may occur due to the chamber inside the housing which is not pressure balanced.

It is preferable for the housing to be made of a material which acts as a gas barrier and which is resistant to RGD. This will prevent the housing being damaged and thus reduce the chance of the chamber not being isolated from the downhole environment and prevent the gases from downhole coming into contact with the insulating portion housed in the chamber in the housing.

In a preferred embodiment not forming part of the present invention, the housing is made from a metallic material such as steel. This means that the housing is a gas barrier and is sufficiently rigid, strong and resilient to RGD to have the benefits discussed above.

The housing may be made from a single component which is sealed around the insulating portion. However it is preferable for the housing to be made from a plurality of components. When the housing comprises a plurality of components it can make manufacture of the assembly easier. It is preferable however for the housing to not comprise too many components as this will increase the number of possible leakage paths from the downhole environment to the chamber inside the housing which receives the insulating portion.

The housing may comprise a termination cover for housing at least part of the termination and at least part of the insulating portion. The housing may also comprise a conductor support body for housing at least part of the insulating portion and which in use is located uphole of the termination cover. Together the termination cover and the conductor support body may form the housing.

By providing a termination cover which houses at least part of the termination and insulating portion the insulating portion can be shielded from the downhole environment by means of the termination cover. Preferably the termination cover extends circumferentially around the insulation portion to provide the chamber therein for the insulating portion and the conductor support body extends circumferentially around the part of the insulation portion not housed in the termination cover.

By providing a conductor support body which houses at least part of the insulating portion the insulating portion can be shielded from the downhole environment by means of the conductor support body.

The insulating portion may be housed partly in the termination cover and partly in the conductor support body. The conductor support body may be arranged to be sealed to the termination cover. Such an arrangement allows the chamber in the conductor support body and the termination cover to be sealed from the downhole environment.

The conductor support body may engage with the uphole end of the termination cover. Preferably the conductor support body defines a socket for receiving an end of the termination cover.

The apparatus may comprise a seal for sealing between the conductor support body and the termination cover. By providing a seal between the termination cover and the conductor support body a path between the downhole environment and the insulating portion can be sealed to prevent gas from the downhole environment reaching the insulating portion housed in the termination cover and the conductor support body. This can help isolate the chamber inside the housing from the downhole environment and can help prevent rapid gas decompression affecting the insulating portion.

When the conductor support body defines a socket receiving an end of the termination cover and the apparatus comprises a seal for sealing between the two parts, a reliable sealing barrier can be formed.

The seal may be a metallic seal which is arranged to be energised by being axially compressed. The seal may be a metallic seal or it may be made from a material other than metal such as a polymeric material, or it may be metall and other material composite. It is preferable that the seal is made from a material which is not susceptible to rapid gas decompression. By using a seal which is resistant to rapid gas decompression to seal the insulating portion from the downhole environment, the seal can prevent gas reaching the parts of the connector which are susceptible to rapid gas decompression and can itself withstand the downhole pressure fluctuations.

The termination cover and the conductor support body which define the housing may be held together by means of a plurality of screws. When the seal is a metallic seal which is arranged to be energised by being axially compressed the screws can ensure that the seal between the two components remains energised during use.

Preferably the apparatus comprises a plurality of electrical contacts for a plurality of cable conductors to form a plurality of terminations, each of which, in use, is to be electrically insulated by an insulating portion, the housing defining a respective chamber for each of the insulating portions. With such an arrangement the assembly can carry a plurality of different phases of power. Preferably the plurality is three so that the assembly can carry three phase power. In that case, the housing may define three chambers.

In the assembly comprising a plurality of terminations, a single housing may provide the plurality of respective chambers. This arrangement reduces the number of component parts and may reduce the complexity of manufacturing the assembly. It also allows the assembly to be more space efficient.

In the arrangement in which the plurality of chambers are provided by a single housing comprising a termination cover and conductor support body it is preferable for the seal between the termination cover and the conductor support body to extend circumferentially around all of the plurality of chambers.

Additionally when the plurality of chambers are provided by a single housing they may be pressure compensated by a single compensation means such as a single compensation chamber. However it is preferable for each chamber to have its own respective compensation means. Each chamber does not then need to be in pressure communication with each other chamber. Also, each pressure compensation means can be smaller so that the arrangement may be more compact as the plurality of compensation means can fit in spaces between each of the chambers. Alternatively, each chamber may not be completely sealed individually but there may be limited fluid communication, e.g. by use of a labyrinth seal, between the chambers. This option means that the size can be minimised whilst still providing increased robustness as the system can work with one phase shorted to earth, i.e. when there is a leak into one of the chambers.

Preferably during manufacture the insulating portion is cast or moulded around the termination.

Casting the insulating portion around the termination means that intimate contact between the insulation and conductor can be achieved to minimise entrapment of air near the termination. In the SpecTRON 5 system discussed above the termination is covered by an elastomeric termination sleeve which is stretched over the end of the cable and connector pin. Such an arrangement has a chance of trapping air around the termination. This is generally not a problem in this system because it operates with lower electrical stress at this interface as a result of the lower operating voltage and greater separation between live and earth. However, the termination is received in a chamber defined by a housing. Preferably the housing is earthed and relatively close to the termination. As a result the electrical stress can be relatively high and thus air around the termination should preferably be eliminated to prevent electrical discharges.

When casting the insulating portion it is preferable to cast the insulating portion in a temporary mould rather than directly into the housing. This means that the volume of the moulded insulating portion can be formed to be smaller than the volume of the chamber in the housing such that an annular cavity between the insulating portion and the housing can be formed as discussed above.

The present invention is concerned with providing a downhole termination apparatus with an improved arrangement for providing seal engagement portions.

The present invention provides downhole cable termination apparatus for terminating a cable, according to claim 1, which is to extend downhole from a tubing hanger to electrical equipment, the apparatus comprising: a first seal for sealing the apparatus uphole of the first seal from the downhole environment; a second seal for sealing the apparatus uphole of the second seal from the downhole environment; and a sleeve arranged to extend around the cable and to be attached to the cable, the sleeve providing a radially outwardly facing engagement portion for the first seal and a radially inwardly facing engagement portion for the second seal, the sleeve having two parts, a first part being arranged to be attached to the cable and providing the radially outwardly facing engagement portion, and a second part providing the radially inwardly facing engagement portion and provided separately from the first part, whereby the second seal is located radially inwardly of the seal carrier, and the sleeve being arranged such that when the apparatus is assembled on the cable the second part is joined to the first part.

By providing an arrangement in which a first part of a sleeve to be attached to the cable is separate from a second part of the sleeve providing the radially inwardly facing engagement portion, the seals do not have to be close to the first part when it is being attached to the cable.

In a preferred embodiment, during manufacture the second seal needs to be placed adjacent to the radially inwardly facing engagement portion of the second part of the sleeve before the second part of the sleeve is fed onto the cable to be positioned around the cable.

The inventors of the present invention have realised that by providing a sleeve in which the part which is attached to the cable is separate from the part of the sleeve which provides the radially inwardly facing seal engagement portion, the first part of the sleeve can be attached to the cable without risk of the attaching step damaging the second seal which is to contact the radially inwardly facing engagement portion. Therefore, according to the present invention, the part of the sleeve which provides the radially inwardly facing seal engagement portion (the second part) is separate from the first part of the sleeve which is arranged to be attached to the cable.

With such an arrangement the second part of the sleeve with the second seal located radially inwardly when the sleeve is arranged around the cable can be held at a location sufficiently far from the first part of the sleeve whilst it is being attached to the cable to prevent the attaching operation damaging the second seal.

The first seal which is arranged to be in contact with the radially outwardly facing engagement portion of the first part of the sleeve can be located in contact with the radially outwardly facing portion after the first part of the sleeve has been attached to the cable. Again, this means that the first part of the sleeve can be attached to the cable without damaging the first seal.

The present invention also provides a downhole cable termination assembly, the assembly comprising the apparatus according to the present invention as described above and the cable which is arranged to extend downhole from a tubing hanger to electrical equipment.

The assembly may include some or all of the optional features and benefits described herein in relation to the apparatus of the present invention.

The present invention also provides a method of manufacturing a downhole cable termination assembly according to claim 10, the method comprising: providing a cable which is to extend downhole from a tubing hanger to electrical equipment; providing a first seal for sealing the apparatus uphole of the first seal from the downhole environment; providing a second seal for sealing the apparatus uphole of the second seal from the downhole environment; providing a sleeve arranged to extend around the cable and to be attached to the cable, the sleeve providing a radially outwardly facing engagement portion for the first seal and a radially inwardly facing engagement portion for the second seal, the sleeve having two parts, a first part being arranged to be attached to the cable and providing the radially outwardly facing engagement portion, and a second part providing the radially inwardly facing engagement portion and provided separately from the first part, whereby the second seal is located radially inwardly of the seal carrier, and the sleeve being arranged such that when the apparatus is assembled on the cable the second part is joined to the first part; attaching the first part of the sleeve to the cable; and joining the second part of the sleeve to the first part of the sleeve.

The method may comprise providing some or all of the features discussed herein in relation to the apparatus and/or the assembly of the present invention.

The discussion below relates to the present invention, as well as the downhole cable termination assembly and the method of manufacturing the assembly according to the present invention.

The first part of the sleeve is arranged to be attached to the cable by solder and the method of manufacturing the assembly comprises soldering the first part of the sleeve to the cable.

When the first part of the sleeve is attached to the cable by solder a leakage path along the surface of the cable under the sleeve can be prevented. Thus a path from the downhole environment to the insulating portion is sealed off. Additionally, soldering the sleeve onto the cable exerts minimal force onto the cable during the attaching operation and therefore minimises the probability of damaging the cable during manufacture of the downhole assembly.

In order to attach the sleeve to the cable by solder, the solder and the surrounding area need to be heated to a high enough temperature to melt the solder. For example the solder may be heated to a temperature of up to 260"C by means of a heat gun and a diffuser which extends at least partly around the outside of the first part of the sleeve which is located around the cable. The seals of the apparatus may be damaged if they are subjected to these high temperatures. As discussed above the two part sleeve of the invention allows the seals to be located remote from the first part of the sleeve whilst it is being attached to the cable so that they are not damaged by the high temperatures.

Preferably the first part of the sleeve has an opening extending radially through the sleeve. Such an opening provides a path for applying the fixing means to attach the sleeve to the cable. For example, when the sleeve is attached to the cable by means of solder, solder paste and/or molten solder wire can be inserted through the opening to allow the sleeve to be soldered to the cable.

In a preferred embodiment the first part of the sleeve is provided with a circumferential cavity in the radially inward surface of the first part of the sleeve. Preferably the circumferential cavity extends around the full circumference of the sleeve. During manufacture the circumferential cavity can be filed with adhesive or solder paste to attach the sleeve to the cable. By providing the circumferential cavity the fixing means can be applied to the inside of the sleeve before it is located around the cable. Additionally, when the cavity extends around the entire circumference of the sleeve it allows the fixing means to extend around the entire circumference of the cable to provide a continuous seal. The cavity provides a space for sufficient fixing means to he held to ensure that the attachment between the sleeve and the cable is reliable.

When the sleeve is provided with an opening which extends radially through the sleeve and a circumferential cavity on the radially inwardly surface, it is preferable for the opening to extend through the sleeve into the circumferential cavity. This means when the sleeve is attached to the cable, the fixing means, e.g. solder, can be pre-filled in the cavity and/or added to the cavity during the attaching operation though the window to ensure that the cavity is filled with the fixing means and that no air bubbles are formed in the cavity. This helps ensure that the sleeve is securely fixed to the cable and that a continuous seal is provided around the entire circumference of the cable within the sleeve to provide a reliable seal.

The cable may comprise a conductive core (for example copper) which is within an insulating sheath (for example PEEK) which is inside a protective sheath (for example lead) which is inside a steel armour. With such a cable it is preferable for the first part of the sleeve to be located around and in contact with the protective sheath of the cable and the second part of the sleeve to be located around and in contact with the insulating sheath of the cable. The first part of the sleeve is attached to the protective sheath of the cable by solder and the second part of the sleeve extends around the insulating sheath of the cable and is joined to the first part of the sleeve.

It is therefore preferable for the minimum inner diameter of the first part of the sleeve to be greater than the minimum inner diameter of the second part of the sleeve. It is preferable for the minimum inner diameter of the first part of the sleeve to be approximately the same as the outer diameter of the protective sheath to ensure a good contact between the first part and the protective sheath when the first part is located around the protective sheath. It is preferable for the minimum inner diameter of the second part of the sheath to be approximately the same as the outer diameter as the insulating sheath of the cable to ensure a good contact between the second part and the insulating sheath when the second part is located around the insulating sheath.

When the second part of the sleeve has a minimum inner diameter which is approximately the same as the outer diameter of the insulating sheath around which it extends it is preferable for the radially inwardly facing engagement portion for the second seal to be provided as a circumferential groove so that there is space between the cable and sleeve for the second seal. The depth of the groove however should be smaller than the height (or cross sectional diameter, if round) of the second seal so that when the second seal is positioned between the sleeve and the cable it is radially compressed to energise the seal.

The second part of the sleeve also provides a radially outwardly facing engagement portion for engagement with one or more seals which in use acts as a back-up seal for the first seal.

Preferably an end portion of the first part of the sleeve is arranged to extend circumferentially around an end portion of the second part of the sleeve.

With such an arrangement the join between the first part of the sleeve and the second part of the sleeve can be made between the end portion of the first part of the sleeve which extends circumferentially around an end portion of the second part of the sleeve. The join can be formed between a radial inwardly facing surface of the first part of the sleeve and a radial outwardly facing surface of the second part of the sleeve.

The join between the first part of the sleeve and the second part of the sleeve can be fixed by any known means such as adhesive or mechanical fasters.

Preferably the second part of the sleeve is attached to the first part of the sleeve by being threadedly engaged therewith. By joining the second part of the sleeve to the first part of the sleeve by threaded engagement the joining of the two parts can be achieved easily during manufacture. Additionally, joining the two parts by threaded engagement reduces the risk of damaging seals which are located near the join during the joining process.

In a preferred embodiment of the assembly an end face at a downhole end portion of the second part of the sleeve is in contact with the protective sheath of the cable to which the first portion is attached. When the second part of the sleeve is arranged to abut the end of the protective sheath to which the first part of the sleeve is attached gaps between the sleeve and the cable can be minimised. This can help prevent air being trapped around the cable which can cause electrical discharges if the electrical gradient around the cable is high enough. This also allows the earth profile provided by the protective sheath of the cable to be continued and to allow the earth to be ended with a smooth, rounded profile which minimises local electrical stress.

It is preferable that during manufacture of the assembly that the first part of the sleeve attached to the cable is held in an oil bath when the second part of the sleeve is joined to the first part of the sleeve.

With this method air can be removed from around the first part of the sleeve before the second part is joined. The second part of the sleeve can be joined to the first part of the sleeve under oil so that no air is trapped between the two parts when they are joined together. This can minimise air that it trapped between the two components which can reduce the problem of electrical discharges mentioned above.

The present invention described above may be provided in combination with one or both of the other aspects. The embodiment of the invention described below embodies the present invention and the first and second aspects in combination. The described embodiment is described, by way of example only, and with reference to the accompanying drawings, in which:
Figure 1 shows a downhole cable termination assembly
Figure 2 is shows an enlarged portion of the assembly of Fig 1

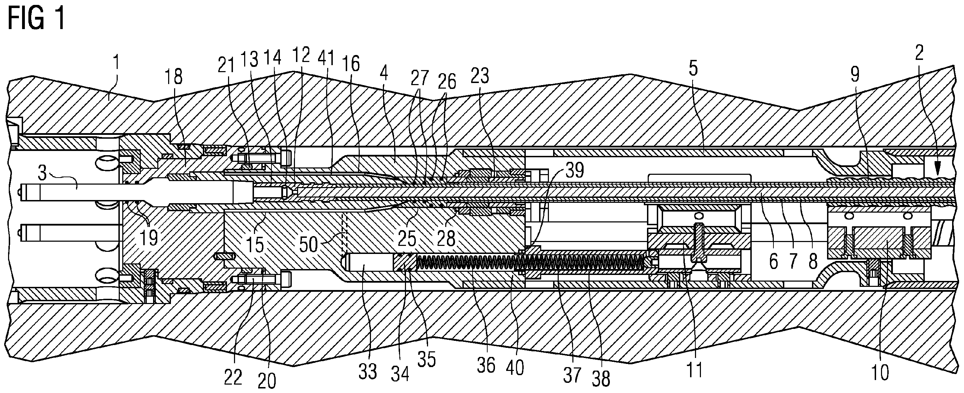

Referring to Figure 1, this shows a downhole cable termination assembly in a tubing hanger 1. A termination is made between a cable 2 and a pin 3 of a connector half which is arranged to be connected to another connector half to form a connector. The cable 2 extends downhole from the termination through a termination cover 4 and a tubing hanger receptacle gland housing 5 to electrical equipment (not shown) such as an electric submersible pump. Typically there are three cables within the termination apparatus, each of which is terminated to a pin 3 of the connector half. The arrangement shown in Figure 1 has three cables, although the cross section is only through one of the cables and its compensation chamber (discussed below).

The cable 2 comprises a conductive copper core 6 within an insulating polyether ether ketone (PEEK) sheath 7 which is within a lead sheath 8 and finally which is within a steel armour 9. Each layer of the cable 2 is concentric with the others. At a downhole portion of the tubing hanger receptacle gland housing 5 the cable is held in a cable grip 10. The cable grip 10 engages with the steel armour 9 of the cable 2 and holds the cable 2 in position within the tubing hanger receptacle gland housing 5. The cable grip 10 engages with the steel armour of all the cables in the assembly. Also within the tubing hanger receptacle gland housing 5, uphole of the cable grip 10 is a cable support 11 which engages with the lead sheath 8 of the cable 2. Again, the cable support 11 engages with the lead sheath of all the cables in the assembly.

The copper core 6 of the cable 2 is terminated to the pin 3 by means of a contact terminal 12. The pin 3 is in contact with a multilam 13 within the contact terminal 12 and held therein by a plurality of grubscrews 14 which extend radially through the contact terminal 12 into the pin 3.

The termination which comprises the end portion of the conductive core 6 of the cable 2, the end portion of the pin 3, the contact terminal 12 and the multilam 13 is encapsulated in a solid insulating portion 15 which has been cast around the termination. Typically the insulating portion is formed of room temperature vulcanising silicone rubber (RTV) but may be made of any other electrical insulating material.

The cast insulating portion which encapsulates the termination is housed within a chamber 16 provided by a metal housing. The metal housing provides a chamber 16 for each insulated termination. The metal housing comprises the termination cover 4 and an electrical contact support body 18. The chamber 16 for housing the insulating portion 15 is partly provided by the termination cover 4 and partly provided by the electrical contact support body 18.

The pin 3 extends from the connector half through the electrical contact support body 18 to the termination which is in the part of the chamber 16 provided by the termination cover 4. The electrical contact support body 18 is sealed to the pin 3 by means of two O-rings 19. The electrical contact support body 18 is sealed to the termination cover 4 by means of a metallic seal 20 which is energised by axial compression and by means of a back up elastomeric seal 21. The electrical contact support body has a recess for receiving an end portion of the termination cover 4. The metallic seal 20 provides a seal between an end face of the electrical contact support body 18 and a radially extending flange of the termination cover 4. The back up elastomeric seal 21 provides a seal between a radial outer surface of the termination cover 4 and a radial inward surface of the electrical contact support body 18. The seal 20 extends around all of the chambers provided within the metal housing. The electrical contact support body 18 is attached to the termination cover 4 by means of a plurality of screws 22 which extend through the radially extending flange of the termination cover 4 into the electrical contact support body 18 to hold the two components together and to maintain the seal between the two components.

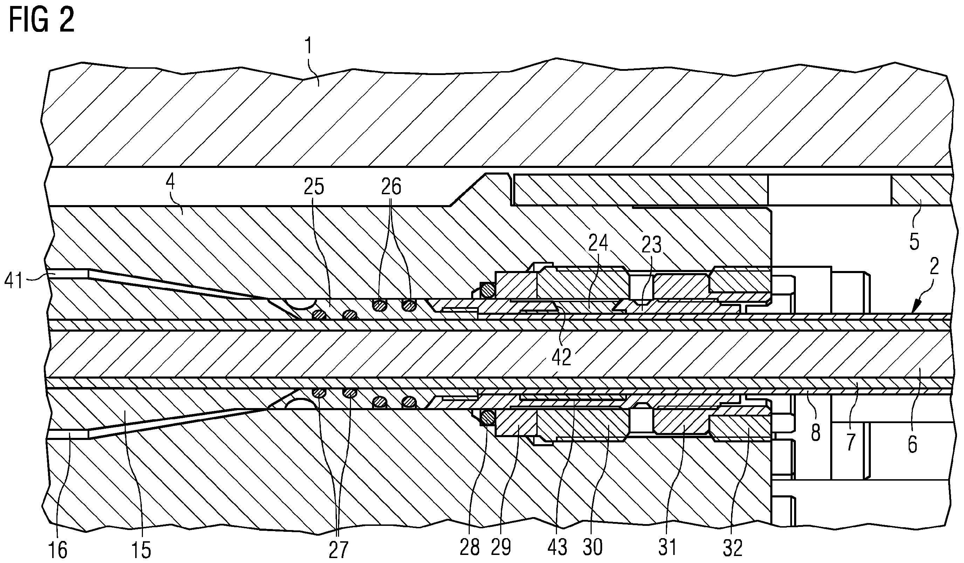

The termination cover 4 is sealed to the cable by means of a sealing arrangement which is shown in greater detail in Figure 2. This sealing arrangement is provided for each cable in the assembly. As can be seen more clearly in Figure 2, attached to the lead sheath 8 of the cable 2 is a solder sleeve 23. The solder sleeve 23 is attached to the lead sheath 8 by means of solder 24. The solder sleeve comprises a solder fill window 42 which extends radially through the solder sleeve to a circumferential cavity 43 on the radial inward face of the solder sleeve 23. The circumferential cavity 43 and the window 42 are filled with solder 24 to attach the solder sleeve 23 to the lead sheath of the cable. The inner diameter of the solder sleeve 23, except the circumferential cavity 43 is substantially the same as the outer diameter of the lead sheath so that the sleeve is in direct engagement with the lead sheath of the cable.

The sealing arrangement also comprises a seal carrier 25. The seal carrier 25 carries two pairs of O-rings 26, 27 in which one pair 26 is located radially outwardly of the seal carrier 25 and the other pair 27 is located radially inwardly of the seal carrier 25. The O-ring pair 26 radially outwardly of the seal carrier provide a seal between the termination cover 4 and the seal carrier 25 and the O-ring 27 pair radially inwardly of the seal carrier provides a seal between the PEEK sheath 7 of the cable 3 and the seal carrier 25. The seal carrier 25 extends around the PEEK sheath 7 of the cable 3 and extends from a downhole end of the insulating portion 15 to the end face of the lead sheath 8. The inner diameter of the seal carrier is substantially the same as the outer diameter of the PEEK sheath such that the seal carrier direct engages with the PEEK sheath. The minimum inner diameter of the solder sleeve 23 is greater than the minimum inner diameter of the seal carrier 25.

Together the solder sleeve 23 and the seal carrier 25 provide a sleeve which extends around the cable. The sleeve provides a radially outwardly facing engagement portion for a metallic seal 28 and a radially inwardly facing engagement portion for the O-ring pair 27. The sleeve comprises the two parts, the solder sleeve 23 (a first part) which attached to the cable 2 and provides the radially outwardly facing engagement portion for the metallic seal 28, and the seal carrier 25 (a second part) which provides the radially inwardly facing engagement portion and is provided separately from the solder sleeve. The solder sleeve 23 and the seal carrier 25 are joined together during manufacture after the solder sleeve 23 has been attached to the lead sheath of the cable by solder.

A downhole portion of the seal carrier 25 extends radially inwardly of an uphole portion of the solder sleeve 23 and these two parts are threadedly engaged. When the two parts are joined together their outer diameters are substantially the same.

During manufacture when the seal carrier 25 is joined to the solder sleeve 23 by means of threaded engagement the solder sleeve and the surrounding cable are held in an oil bath. This prevents air being trapped at the end of the lead sheath where there may be a high electrical stress.

The solder sleeve 23 provides an engagement surface for the metallic seal 28 which is energised by being compressed axially. The metallic seal 28 when energised creates a seal between the solder sleeve 23 and the termination cover 4.

Radially outwardly of the cable 2 and solder sleeve 23 but radially inwardly of the termination cover 4 in a downhole sequence are a compression ring 29, a termination cover retaining ring 30, a solder sleeve retaining ring 31 and a termination locking ring 32. The compression ring 29 extends between the metallic seal 28 and the termination cover retaining ring 30 and acts as a thrust washer between the metallic seal 28 and the termination cover retaining ring 30. The termination cover retaining ring 30 extends between the compression ring 29 and the solder sleeve retaining ring 31 and is threadedly engaged with the termination cover 4. During manufacture of the assembly, rotation of the termination cover retaining ring 30, axially compresses the metallic seal 28 by means of the compression ring 29 to energise the seal. The solder sleeve retaining ring 31 extends between the termination cover retaining ring 30 and the termination locking ring 32 and is threadedly engaged with the solder sleeve 23. Finally the termination locking ring 32 extends from the solder sleeve retaining ring 31 to the end of the termination cover 4. The termination locking ring 32 is threadedly engaged with the termination cover 4 and in the assembly is flush with the end of the termination cover 4. The described arrangement of the retaining ring 30, the solder sleeve retaining ring 31 and the termination locking ring 32 is provided to keep the metallic seal 28 energised and to prevent movement of the solder sleeve 23 during use.

As shown in Figure 1 the termination cover 4 also provides a compensation chamber 33 which is in fluid communication with the chamber 16 provided in the termination cover 4 by means of a passage 50. Each chamber is provided with a respective compensation chamber.

Within the compensation chamber 33 is a compensation piston 34 which holds a pair of O-ring seals 35 which engages between the piston 35 and the walls of the compensation chamber 33 (the termination chamber 4). The piston 35 has a rod 36 which extends downhole in a spring 37 which is held between the piston 34 and the bottom of a compensator spring extension tube 38. The compensator spring extension tube 38 extends partly into a recess provided in the downhole face of the termination cover 4 and is clamped in position by two screws (not shown) and threadedly engaged with the termination cover 4 to close the compensation chamber 33. The compensator spring extension tube 38 is sealed to the termination cover 4 by means of a metallic C seal 39 and an O-ring 40. The metallic C seal 39 is located between the end face of the termination cover 4 and a radially extending flange of the compensator spring extension tube and the O-ring 40 is provided within the recess in the termination cover housing and provides a seal between a radially outwardly facing surface of the compensator spring extension tube 38 and a radially inwardly facing surface of the termination cover 4.

The chamber 16 within the termination cover 4 which houses the insulating portion 15 has, at moderate temperatures, a larger volume than the insulating portion 15. As a result, as shown in Figure 1 there is an annular cavity 41 between the termination cover 4 and the insulating portion 15 which extends circumferentially around the insulating portion within the termination cover 4. The annular cavity 41 within the termination cover 4, the passage and the compensator chamber 33 uphole of the piston 34 are filled with a pressure transmitting medium such as oil. When the assembly is subjected to temperature changes, due to the differences in the thermal coefficient of expansion between the insulating portion 15 and the termination cover 4, the insulating portion 15 changes in volume more than the termination cover 4. As a result of this differential thermal expansion the annular cavity 41 between the insulating portion 15 and the termination cover 4 changes in volume and this change in volume is accommodated by movement of the piston 34 in the compensation chamber 33. This means that a build up of pressure between the insulating portion 15 and the termination cover 4 due to temperature changes can be minimised and/or prevented.

As shown in the Figures and described above, each path from the downhole environment to the insulating portion 15 is sealed by means of a metallic seal and at least one elastomeric back-up seal. In other words, all the primary seals between the insulating portion 15 and the downhole environment are seals which are not susceptible to damage by rapid gas decompression. The metallic seals isolate the internals of the connector from gas of the downhole environment and fluctuating pressures so the problem of rapid gas decompression is reduced and/or prevented.

There are four leakage paths shown in the assembly of Figure 1 which are sealed in this manner. The first path is the path over the solder sleeve 23 and the seal carrier 25 which is sealed by a primary metallic seal 28 between the solder sleeve 23 and the termination cover 4 and the pair of back up O-rings 26 which seal between the seal carrier 25 and the termination cover 4. The second path is the path under the solder sleeve 23 and the seal carrier 25 along the outer surface of the cable 2 which is sealed by means of solder 24 attaching the solder sleeve 23 to the lead sheath 8 of the cable 2 and the pair of radially inner O-rings 26,27 which seal between the seal carrier 25 and the PEEK sheath 7. The third path is the path between the termination cover 4 and the compensator spring extension tube 38 which leads from the downhole environment to the compensation chamber 33. The third path is sealed by means of a metallic C seal 39 between the termination cover 4 and the compensator spring extension tube 38 as a metallic primary seal and a first back up elastomeric seal 40 between the compensator spring extension tube 38 and the termination cover 4 and a pair of O-rings 35 between the piston 34 and the termination cover 4. The final path, which is the join between the termination cover 4 and the electrical contact support body 18, is sealed by a primary metallic seal 20 and a back up elastomeric seal 21.

## Claims

1. Downhole cable termination apparatus for terminating a cable (2) which is to extend into a downhole environment from a tubing hanger (1) to electrical equipment and which comprises a protective sheath (8), the apparatus comprising:
a first seal (28) for sealing the apparatus uphole of the first seal from the downhole environment; and
a second seal (27) for sealing the apparatus uphole of the second seal from the downhole environment;
**characterized by** further comprising
a sleeve arranged to extend around the cable (2) and to be attached to the cable (2), the sleeve providing a radially outwardly facing engagement portion for the first seal (28) and a radially inwardly facing engagement portion for the second seal (27),
the sleeve having two parts (23, 25),
a first part (23), a solder sleeve, being arranged to be located around and in contact with the protective sheath (8) of the cable (2) and to be attached to the protective sheath (8), the solder sleeve (23) further providing the radially outwardly facing engagement portion, and
a second part (25), a seal carrier, providing the radially inwardly facing engagement portion and provided separately from the solder sleeve (23), whereby the second seal (27) is located radially inwardly of the seal carrier (25), and
the sleeve being arranged such that when the apparatus is assembled on the cable (2) the seal carrier (25) is joined to the solder sleeve (23), wherein the protective sheath (8) comprises lead; wherein the first seal (28) is a metallic seal; and wherein the solder sleeve (23) is arranged to be attached to the protective lead sheath (8) by solder (24).

2. Apparatus as claimed in claim 1, wherein the solder sleeve (23) has a solder fill window (42) extending radially through said solder sleeve (23).

3. Apparatus as claimed in claim 1 or 2, wherein the solder sleeve (23) is provided with a circumferential cavity (43) on a radially inward surface thereof.

4. Apparatus as claimed in any preceding claim, wherein a minimum inner diameter of the solder sleeve (23) is greater than a minimum inner diameter of the seal carrier (25).

5. Apparatus as claimed in any preceding claim, wherein an end portion of the solder sleeve (23) is arranged to extend circumferentially around an end portion of the seal carrier (25).

6. A downhole cable termination assembly; the assembly comprising the apparatus of any preceding claim and the cable (2) which is arranged to extend downhole from a tubing hanger to electrical equipment.

7. The assembly as claimed in claim 6, wherein a radial face at a downhole end portion of the seal carrier (25) is in contact with the protective lead sheath (8) of the cable (2).

8. An assembly as claimed in any of claims 6 and 7, wherein the seal carrier (25) extends around an insulating sheath (7) of the cable (2).

9. An assembly as claimed in any of claims 6 to 8, wherein the second seal (27) seals between the cable (2) and the seal carrier (25).

10. A method of manufacturing a downhole cable termination assembly, the method comprising:
providing a cable (2) which is to extend downhole into a downhole environment from a tubing hanger to electrical equipment;
providing a first seal (28) for sealing the apparatus uphole of the first seal (28) from the downhole environment; and
providing a second seal (27) for sealing the apparatus uphole of the second seal (27) from the downhole environment;
**characterized in that** the method further comprises
providing a sleeve (23, 25) arranged to extend around the cable (2) and to be attached to the cable, the sleeve providing a radially outwardly facing engagement portion for the first seal (28) and a radially inwardly facing engagement portion for the second seal (27), the first seal (28) is a metallic seal, the sleeve having two parts, a first part (23), a solder sleeve, being arranged to be located around and in contact with a protective lead sheath (8) of the cable (2) and to be attached to said protective lead sheath (8), the solder sleeve (23) further providing the radially outwardly facing engagement portion, and a second part (25), a seal carrier, providing the radially inwardly facing engagement portion and provided separately from the solder sleeve (23), whereby the second seal (27) is located radially inwardly of the seal carrier (25), and the sleeve being arranged such that when the apparatus is assembled on the cable (2) the seal carrier (25) is joined to the solder sleeve (23);
attaching the solder sleeve (23) to the protective lead sheath (8), the attaching of the solder sleeve (23) comprising soldering the solder sleeve (23) to the protective lead sheath (8); and
joining the seal carrier (25) to the solder sleeve (23).

11. A method as claimed in claim 10, wherein the solder sleeve (23) attached to the cable (2) is held in an oil bath when the seal carrier (25) is joined to the solder sleeve (23).

12. A method according to claim 10 or claim 11, wherein the solder sleeve (23) is provided with an opening comprising a solder fill window (42) which extends radially through said solder sleeve (23) and a circumferential cavity (43)
on a radially inward surface of said solder sleeve (43), the opening extending through the solder sleeve (23) into the circumferential cavity (43); wherein the attaching comprises pre-filling the cavity (43) with solder (24) and adding solder (24) to the cavity (43) during the attaching operation though the window (42).

## Patentansprüche

1. Bohrlochkabelabschlussvorrichtung zum Abschließen eines Kabels (2), das von einem Steigrohrhänger (1) zu elektrischer Ausrüstung in einer Bohrlochumgebung verlaufen soll und das eine Schutzhülle (8) umfasst, wobei die Vorrichtung Folgendes umfasst:
eine erste Dichtung (28) zum Abdichten der Vorrichtung lochaufwärts bezüglich der ersten Dichtung von der Bohrlochumgebung und
eine zweite Dichtung (27) zum Abdichten der Vorrichtung lochaufwärts bezüglich der zweiten Dichtung von der Bohrlochumgebung,
ferner **gekennzeichnet durch** Umfassen
einer Hülse, die so angeordnet ist, dass sie sich um das Kabel (2) herum erstreckt, und an dem Kabel (2) angebracht werden soll,
wobei die Hülse einen radial nach außen weisenden Eingriffsabschnitt für die erste Dichtung (28) und einen radial nach innen weisenden Eingriffsabschnitt für die zweite Dichtung (27) bereitstellt,
wobei die Hülse zwei Teile (23, 25) hat,
einen ersten Teil (23), eine Löthülse, die so angeordnet ist,
dass sie sich um die Schutzhülle (8) des Kabels (2) herum erstreckt und in Kontakt damit befindet, und an der Schutzhülle (8) angebracht werden soll, wobei die Löthülse (23) ferner den radial nach außen weisenden Eingriffsabschnitt bereitstellt, und
einen zweiten Teil (25), einen Dichtungsträger, der den radial nach innen weisenden Eingriffsabschnitt bereitstellt und von der Löthülse (23) getrennt bereitgestellt wird, wobei die zweite Dichtung (27) von dem Dichtungsträger (25) radial nach innen angeordnet ist, und
die Hülse so angeordnet ist, dass wenn die Vorrichtung an dem Kabel (2) montiert ist, der Dichtungsträger (25) mit der Löthülse (23) verbunden ist,
wobei die Schutzhülle (8) Blei umfasst, wobei die erste Dichtung (28) eine Metalldichtung ist und wobei die Löthülse (23) so angeordnet ist, dass sie mithilfe eines Lötmittels (24) an der Bleischutzhülle (8) befestigt ist.

2. Vorrichtung nach Anspruch 1, wobei die Löthülse (23) ein Lötmitteleinfüllfenster (42) hat, das sich radial durch die Löthülse (23) erstreckt.

3. Vorrichtung nach Anspruch 1 oder 2, wobei die Löthülse (23) mit einem umlaufenden Hohlraum (43) auf einer radial inneren Fläche davon bereitgestellt wird.

4. Vorrichtung nach einem der vorhergehenden Ansprüche, wobei ein minimaler innerer Durchmesser der Löthülse (23) größer ist als ein minimaler innerer Durchmesser des Dichtungsträgers (25) .

5. Vorrichtung nach einem der vorhergehenden Ansprüche, wobei ein Endabschnitt der Löthülse (23) so angeordnet ist, dass er sich in Umfangsrichtung um einen Endabschnitt des Dichtungsträgers (25) erstreckt.

6. Bohrlochkabelabschlussbaugruppe, wobei die Baugruppe die Vorrichtung nach einem der vorhergehenden Ansprüche und das Kabel (2) umfasst, das so angeordnet ist, dass es lochabwärts von einem Steigrohrhänger zu elektrischer Ausrüstung verläuft.

7. Baugruppe nach Anspruch 6, wobei eine radiale Fläche an einem lochabwärtigen Ende des Dichtungsträgers (25) sich mit der Bleischutzhülle (8) des Kabels (2) in Kontakt befindet.

8. Baugruppe nach einem der Ansprüche 6 und 7, wobei der Dichtungsträger (25) sich um eine Isolierhülle (7) des Kabels (2) herum erstreckt.

9. Baugruppe nach einem der Ansprüche 6 bis 8, wobei die zweite Dichtung (27) zwischen dem Kabel (2) und dem Dichtungsträger (25) abdichtet.

10. Verfahren zum Herstellen einer Bohrlochkabelabschlussvorrichtung, das Folgendes umfasst:
Bereitstellen eines Kabels (2), das von einem Steigrohrhänger lochabwärts zu elektrischer Ausrüstung in einer Bohrlochumgebung verlaufen soll,
Bereitstellen einer ersten Dichtung (28) zum Abdichten der Vorrichtung lochaufwärts bezüglich der ersten Dichtung (28) von der Bohrlochumgebung und
Bereitstellen einer zweiten Dichtung (27) zum Abdichten der Vorrichtung lochaufwärts bezüglich der zweiten Dichtung (27) von der Bohrlochumgebung,
**dadurch gekennzeichnet, dass** das Verfahren ferner Folgendes umfasst:
Bereitstellen einer Hülse (23, 25), die so angeordnet ist, dass sie sich um das Kabel (2) herum erstreckt, und an dem Kabel angebracht werden soll, wobei die Hülse einen radial nach außen weisenden Eingriffsabschnitt für die erste Dichtung (28) und einen radial nach innen weisenden Eingriffsabschnitt für die zweite Dichtung (27) bereitstellt, wobei die erste Dichtung (28) eine Metalldichtung ist,
wobei die Hülse zwei Teile (23, 25) hat, einen ersten Teil (23), eine Löthülse, die so angeordnet ist, dass sie sich um die Bleischutzhülle (8) des Kabels (2) herum erstreckt und in Kontakt damit befindet, und an der Bleischutzhülle (8) angebracht werden soll, wobei die Löthülse (23) ferner den radial nach außen weisenden Eingriffsabschnitt bereitstellt, und
einen zweiten Teil (25), einen Dichtungsträger, der den radial nach innen weisenden Eingriffsabschnitt bereitstellt und von der Löthülse (23) getrennt bereitgestellt wird, wobei die zweite Dichtung (27) von dem Dichtungsträger (25) radial nach innen angeordnet ist, und die Hülse so angeordnet ist, dass wenn die Vorrichtung an dem Kabel (2) montiert ist, der Dichtungsträger (25) mit der Löthülse (23) verbunden ist, Befestigen der Löthülse (23) an der Bleischutzhülle (8), wobei das Befestigen der Löthülse (23) das Verlöten der Löthülse (23) mit der Bleischutzhülle (8) umfasst, und
Verbinden des Dichtungsträgers (25) mit der Löthülse (23).

11. Verfahren nach Anspruch 10, wobei die an dem Kabel angebrachte Löthülse (23) in ein Ölbad gehalten wird, wenn der Dichtungsträger (25) mit der Löthülse (23) verbunden wird.

12. Verfahren nach Anspruch 10 oder Anspruch 11, wobei die Löthülse (23) mit einer Öffnung bereitgestellt wird, die ein Lötmitteleinfüllfenster (42), das sich radial durch die Löthülse (23) erstreckt, und einen umlaufenden Hohlraum (43) auf einer radial inneren Fläche der Löthülse (43) aufweist, wobei die Öffnung sich durch die Löthülse (23) in den umlaufenden Hohlraum (43) erstreckt, wobei das Anbringen das Vorbefüllen des Hohlraums (43) mit Lötmittel (24) und das Zugeben von Lötmittel (24) in den Hohlraum (43) während des Anbringungsvorgangs durch das Fenster (42) umfasst.

## Revendications

1. Appareil de raccordement de câbles en fond de trou servant à raccorder un câble (2) qui doit s'étendre dans l'environnement d'un fond de trou depuis une olive de suspension (1) jusqu'à un équipement électrique, et qui comprend une gaine protectrice (8), l'appareil comprenant :
un premier joint (28) servant à sceller l'appareil du côté gueule de trou du premier joint par rapport à l'environnement de fond de trou, et
un deuxième joint (27) servant à sceller l'appareil du côté gueule de trou du deuxième joint par rapport à l'environnement de fond de trou,
**caractérisé en ce qu'**il comprend par ailleurs :
un manchon agencé en vue de s'étendre autour du câble (2) et d'être fixé au câble (2), le manchon fournissant pour le premier joint (28) une partie d'appui tournée, dans le plan radial, vers l'extérieur et pour le deuxième joint (27) une partie d'appui tournée, dans le plan radial, vers l'intérieur, le manchon comportant deux parties (23, 25),
une première partie (23) - un manchon de soudage - étant agencée en vue d'être située autour de, et en contact avec, la gaine protectrice (8) du câble (2), et d'être fixée à la gaine protectrice (8), le manchon de soudage (23) fournissant par ailleurs la partie d'appui tournée, dans le plan radial, vers l'extérieur, et
une deuxième partie (25) - un porte-joint - fournissant la partie d'appui tournée, dans le plan radial, vers l'intérieur et réalisée séparément par rapport au manchon de soudage (23), moyennant quoi le deuxième joint (27) est situé, dans le plan radial, en dedans du porte-joint (25), et le manchon est agencé de telle sorte que, quand l'appareil est assemblé sur le câble (2), le porte-joint (25) est joint au manchon de soudage (23), étant entendu que la gaine protectrice (8) comprend du plomb, que le premier joint (28) est un joint métallique et que le manchon de soudage (23) est agencé en vue d'être fixé à la gaine protectrice (8) en plomb au moyen d'une soudure tendre (24).

2. Appareil selon la revendication 1, étant entendu que le manchon de soudage (23) comporte une fenêtre (42) de remplissage de soudure tendre s'étendant, dans le plan radial, à travers ledit manchon de soudage (23).

3. Appareil selon la revendication 1 ou 2, étant entendu que le manchon de soudage (23) est doté d'une cavité circonférentielle (43) sur une surface de celui-ci orientée, dans le plan radial, vers l'intérieur.

4. Appareil selon l'une quelconque des revendications précédentes, étant entendu qu'un diamètre intérieur minimal du manchon de soudage (23) est supérieur à un diamètre intérieur minimal du porte-joint (25).

5. Appareil selon l'une quelconque des revendications précédentes, étant entendu qu'une partie terminale du manchon de soudage (23) est agencée en vue de s'étendre autour de la circonférence d'une partie terminale du porte-joint (25).

6. Ensemble de raccordement de câbles en fond de trou, l'ensemble comprenant l'appareil selon l'une quelconque des revendications précédentes et le câble (2) qui est agencé pour s'étendre vers le fond de trou depuis une olive de suspension jusqu'à l'équipement électrique.

7. Ensemble selon la revendication 6, étant entendu qu'une face radiale au niveau d'une partie d'extrémité en fond de trou du porte-joint (25) est en contact avec la gaine protectrice (8) en plomb du câble (2).

8. Ensemble selon l'une quelconque des revendications 6 et 7, étant entendu que le porte-joint (25) s'étend autour d'une gaine isolante (7) du câble (2).

9. Ensemble selon l'une quelconque des revendications 6 à 8, étant entendu que le deuxième joint (27) assure l'étanchéité entre le câble (2) et le porte-joint (25).

10. Procédé de fabrication d'un ensemble de raccordement de câbles en fond de trou, le procédé consistant :
à mettre à disposition un câble (2) qui doit s'étendre en fond de trou dans l'environnement d'un fond de trou depuis une olive de suspension jusqu'à un équipement électrique ;
à mettre à disposition un premier joint (28) servant à sceller l'appareil du côté gueule de trou du premier joint (28) par rapport à l'environnement de fond de trou, et
à mettre à disposition un deuxième joint (27) servant à sceller l'appareil du côté gueule de trou du deuxième joint (27) par rapport à l'environnement de fond de trou, **caractérisé en ce que** le procédé consiste par ailleurs :
à mettre à disposition un manchon (23, 25) agencé en vue de s'étendre autour du câble (2) et d'être fixé au câble, le manchon fournissant pour le premier joint (28) une partie d'appui tournée, dans le plan radial, vers l'extérieur et pour le deuxième joint (27) une partie d'appui tournée, dans le plan radial, vers l'intérieur, le premier joint (28) étant un joint métallique, le manchon comportant deux parties, une première partie (23) - un manchon de soudage - étant agencée en vue d'être située autour de, et en contact avec, une gaine protectrice (8) en plomb du câble (2), et d'être fixée à ladite gaine protectrice (8) en plomb, le manchon de soudage (23) fournissant par ailleurs la partie d'appui tournée, dans le plan radial, vers l'extérieur, et
une deuxième partie (25) - un porte-joint - fournissant la partie d'appui tournée, dans le plan radial, vers l'intérieur et réalisée séparément par rapport au manchon de soudage (23), moyennant quoi le deuxième joint (27) est situé, dans le plan radial, en dedans du porte-joint (25), et le manchon étant agencé de telle sorte que, quand l'appareil est assemblé sur le câble (2), le porte-joint (25) est joint au manchon de soudage (23) ;
à fixer le manchon de soudage (23) à la gaine protectrice (8) en plomb, la fixation du manchon de soudage (23) consistant à souder le manchon de soudage (23) à la gaine protectrice (8) en plomb, et
à joindre le porte-joint (25) au manchon de soudage (23).

11. Procédé selon la revendication 10, étant entendu que le manchon de soudage (23) fixé au câble (2) est maintenu dans un bain d'huile quand le porte-joint (25) est joint au manchon de soudage (23).

12. Procédé selon la revendication 10 ou la revendication 11, étant entendu que le manchon de soudage (23) est doté d'une ouverture comportant une fenêtre (42) de remplissage de soudure tendre qui s'étend, dans le plan radial, à travers ledit manchon de soudage (23), et d'une cavité circonférentielle (43) sur une surface dudit manchon de soudure (43) orientée, dans le plan radial, vers l'intérieur, l'ouverture s'étendant à travers le manchon de soudure (23) jusque dans la cavité circonférentielle (43), étant entendu que la fixation consiste à préremplir la cavité (43) de soudure tendre (24) et à ajouter la soudure tendre (24) à la cavité (43) à travers la fenêtre (42) pendant l'opération de fixation.
